# EUROPEAN PATENT SPECIFICATION

(11) **EP 1 725 052 B1**
(45) Date of publication and mention of the grant of the patent: **19.08.2009**
(21) Application number: 05755035.2
(22) Date of filing: 22.06.2005
(51) Int. Cl.: H04W 36/08

(54) **METHOD TO RECEIVE VOICE AFTER CELL RESELECTION**
VERFAHREN ZUM SPRACHEMPFANG NACH EINER ZELLEN-WIEDERWAHL
PROCEDE PERMETTANT DE RECEVOIR DES DONNEES VOCALES APRES UNE RESELECTION DE CELLULE

(30) Priority: 22.06.2004 CN 200410059925
(43) Date of publication of application: 22.11.2006
(73) Proprietor: Huawei Technologies Co., Ltd., Longgang District Shenzhen Guangdong 518129 (CN)
(72) Inventor: XIA, Zhili Huawei Administration Building, Guangdong 518129 (CN); SHEN, Minjun Huawei Administration Building, Guangdong 518129 (CN); CUI, Xiaochun Huawei Administration Building, Guangdong 518129 (CN)
(74) Representative: Manitz, Finsterwald & Partner GbR
(86) International application number: PCT/CN2005/000896
(87) International publication number: WO 2005/125224

(56) References cited:
- EP-A1- 1 379 013
- EP-B1- 1 332 639
- WO-A-00/35230
- WO-A-00/38439
- WO-A-96/20573
- WO-A-04/017525
- CN-A- 1 601 948
- FR-A- 2 702 109
- US-A1- 2003 129 982

## Description

### Field of the Technology

The present invention relates to cell reselection techniques in trunking systems, more particularly to a method for a private listening Mobile Station (MS) to receive voice after cell reselection. Relevant techniques are known from US 2003/129982 A1, FR 2702109 A1, WO 00/35230 A1 and WO 2004/017525 A.

### Background of the Invention

As to trunking communication networks constructed adopting ideas of private trunking networks, each private trunking network may be constructed separately and operate independently due to their different techniques and organics, which tends to form a situation that each does things in its own way and leads to a low frequency utilization ratio, a high network construction cost and a high network maintenance cost. With the development of the trunking communication technology from analogue to digital, the tendency of the trunking communication network construction is changing from independent private networks to a public trunking network.

At present, Global System for Mobile communication (GSM) has advanced technical schemes and broad user foundations all over the world. In addition, the GSM accords with the tendency of the trunking common network and it has good technical foundation for developing trunking services. Therefore, the GSM becomes a developing direction of the trunking common network. For example, Europe has specified a set of standards used for GSM-Railway (GSM-R), which takes the GSM communication technique as a service bearer and can provide basic trunking services like Voice Group Call Service (VGCS) and Voice Broadcast Service (VBS), etc.

Although the GSM-R system can provide basic trunking services, compared with the private trunking networks, the GSM-R system has less application services that are applicable for special trunking departments. For example, both two mainstream trunking digital systems, which are Integrated Digital Enhanced Network (IDEN) and Terrestrial Enhanced Trunked Radio Network Architecture (TETRA), support a Voice Private Call Service (VPCS), but the GSM-R system does not support the VPCS. Therefore, a digital trunking system is developed based on the GSM system, such as GT800 system, which can provide not only basic trunking services based on the GSM but also special trunking services including the VPCS.

When a GT800 provides the VPCS, a group call area only consists of cell(s) where two private call sides are currently located. The private call operates in a half-duplex mode, in other words, one of the private call sides presses a Push-to-Talk (PTT) key to talk while the other side who does not press the PTT key listens to the voice. The speaker of the two private call sides is in a group call transmitting mode and the listener is in a group call receiving mode. When located in the same cell, the two private call sides share a Traffic Channel (TCH) and preempt an uplink of the TCH through pressing the PTT key; when located in different cells, each of the two private call sides respectively occupies a TCH and the two sides preempt a speaking chance still through pressing the PTT key.

When moving from one cell to another, a private listening MS must continuously receive the voice after cell reselection to maintain a private call. At present, the method for a private listening MS to receive voice after cell reselection is the same as that for a listening MS of a trunking group call to receive voice after cell reselection.

There are two methods for a listening MS of a trunking group call to receive voice after cell reselection: the first method, each cell covered by the area that the listening MS may pass, i.e., each cell covered by the trunking group that the listening MS belongs to, needs to assign a TCH for the listening MS, so that the listening MS can listen to the voice on the assigned TCH in the reselected cell; the second method, a network side of the digital trunking system periodically broadcasts a group call notification on a Notification Channel (NCH) of each cell that the listening MS may pass, after the listening MS reselects a cell and returns a group call notification response, the network side assigns a TCH for the listening MS in the reselected cell, so that the listening MS can receive voice on the assigned TCH.

Since the number of the TCH used for group call in the GSM-based digital trunking system and the capacity of the NCH in a cell are strictly constrained, if a private listening MS reselects a cell by the above-mentioned two methods, the performance of the whole GSM-based digital trunking system will be severely affected.

### Summary of the Invention

The present invention provides a method for a private listening Mobile Station (MS) to receive voice after cell reselection, which guarantees scheduling performance of trunking system private calls, and further makes it possible for the private listening MS to receive voice after cell reselection.

The present invention is implemented as follows:
A method for a private listening MS to receive voice after cell reselection in a digital trunking system includes the following steps:
   a network side of the digital trunking system receiving a private notification response from the private listening MS, which moves across cells;
   the network side of the digital trunking system determining the private call statuses of the private listening MS before and after the cell reselection according to the private notification response;
   when an inter-cell private call is changed to an intra-cell private call, the network side releasing a Traffic Channel (TCH) assigned by an original cell of the private listening MS, voice is received by the private listening MS on a TCH assigned for a private speaker in the reselected cell;
   when an intra-cell private call is changed to an inter-cell private call, the network side assigning a TCH for the private listening MS in the reselected cell, voice is received by the private listening MS on the assigned TCH in the reselected cell;
   when an inter-cell private call is changed to another inter-cell private call, the network side releasing the TCH assigned for the private listening MS in the original cell and assigning a TCH for the private listening MS in the reselected cell, voice is received by the private listening MS on the assigned TCH in the reselected cell.
   The private notification response carries information of the reselected cell of the private listening MS;
   the step of determining the private call statuses of the private listening MS before and after reselecting the cell includes:
   when the information of the original cell of the private listening MS stored in the network side is the same as that of the current cell of the private speaking MS, changing the intra-cell private call to an inter-cell private call;
   when the information of the reselected cell of the private listening MS carried in the private notification response is the same as that of the current cell of the private speaking MS stored in the network side, changing the inter-cell private call to an intra-cell private call;
   when the information of the original cell of the private listening MS stored in the network side is different from that of the current cell of the private speaking MS stored in the network side, and the information of the reselected cell of the private listening MS carried in the private notification response is different from that of the current cell of the private speaking MS stored in the network side, changing the inter-cell private call to another inter-cell private call.

The information of the reselected cell of the private listening MS includes at least an identifier which is used for uniquely identifying the reselected cell of the private listening MS.

When the private listening MS is moving across cells which belong to different location areas, the method further includes a step of location updating for the private listening MS after the private listening MS begins to receive voice in the reselected cell or before the private listening MS sends the private notification response to the network side of the digital trunking system.

The private notification response is sent to a Base Station Controller (BSC) of the network side through a target Base Transceiver Station (BTS) of the reselected cell of the private listening MS.

After receiving the private notification response from the private listening MS by the network side, the method further includes the following steps:
the BSC activating an Abis interface between the BSC and the target BTS, and sending an Abis interface activated message to the target BTS;
the target BTS sending an Abis interface activated response to the BSC, the BSC assigning an Stand-alone Dedicated Control Channel (SDCCH) for the private listening MS;
the BSC receiving a link establish frame reported by the private listening MS on the assigned SDCCH through the target BTS, the BSC returning a confirmation frame to the private listening MS;
the BSC requesting a Mobile Switching Center (MSC) of the network side it belongs to, to establish a Signaling Connection Control Point (SCCP) connection for the current private notification response;
the MSC of the network side determining the private call statuses of the private listening MS before and after the cell reselection.

After the private listening MS begins to receive voice in the reselected cell, the method further includes:
the MSC of the network side sending an assignment completion command of the current private notification response to the BSC;
the BSC releasing the SDCCH established for the private listening MS;
the BSC receiving a link frame disconnect message returned by the private listening MS through the target BTS;
the BSC sending a clear completion message to the MSC of the network side.

The step of releasing a TCH assigned by an original cell of the private listening MS includes:
clearing the SCCP connection of the private listening MS in the original cell;
the step of assigning a TCH for the private listening MS in the reselected cell includes: after establishing the SCCP connection in the reselected cell for the private listening MS, assigning a TCH for the private listening MS;
the step of releasing the TCH assigned for the private listening MS in the original cell and assigning a TCH for the private listening MS in the reselected cell includes:
clearing the SCCP connection of the private listening MS in the original cell, after establishing the SCCP connection in the reselected cell for the private listening MS, assigning a TCH for the private listening MS.

The method further includes: when the information of the reselected cell of the private listening MS carried in the private notification response is the same as that of current cell of the private speaking MS stored in the network side, the network side not deleting the SCCP connection of the private listening MS in the original cell and not releasing the TCH assigned for the private listening MS in the original cell.

A GSM-based digital trunking system includes one or more network side apparatuses, wherein the digital trunking system is configured for carrying out the method described above.

A Mobile Switching Center (MSC) in a GSM-based digital trunking system includes:
equipment configured for receiving a private notification response from a private listening MS, which moves across cells;
equipment configured for determining the private call statuses of the private listening MS before and after the cell reselection according to the private notification response; and
equipment configured for sending a command to a Base Station Controller, BSC, for releasing a Traffic Channel, TCH, assigned by an original cell of the private listening MS when an inter-cell private call is changed to an intra-cell private call, wherein the private listening MS receives voice on a TCH assigned for a private speaker in the reselected cell.

The equipment configured for sending is configured for sending a request to a BSC for assigning a TCH for the private listening MS in the reselected cell when an intra-cell private call is changed to an inter-cell private call, wherein the private listening MS receives voice on the assigned TCH in the reselected cell.

The equipment configured for sending is configured for sending a command to a BSC for releasing the TCH assigned by the original cell of the private listening MS, and for sending a request to a BSC for assigning a TCH for the private listening MS in the reselected cell when an inter-cell private call is changed to another inter-cell private call, wherein the private listening MS receives voice on the assigned TCH in the reselected cell.

A Base Station Controller (BSC) in a GSM-based digital trunking system includes:
equipment configured for receiving a private notification response from a private listening MS, which moves across cells;
equipment configured for sending a request to a Mobile Switching Center, MSC, including the private notification response; wherein
the equipment configured for receiving is configured for receiving a result, determined by the MSC, of the private call statuses of the private listening MS before and after the cell reselection according to the private notification response, and
the equipment configured for sending is configured for sending a message to a Base Transceiver Station, BTS, for releasing a Traffic Channel, TCH, assigned by an original cell of the private listening MS when an inter-cell private call is changed to an intra-cell private call, wherein the private listening MS receives voice on a TCH assigned for a private speaker in the reselected cell.

The equipment configured for sending is configured for sending a command to a BTS, for assigning a TCH for the private listening MS in the reselected cell when an intra-cell private call is changed to an inter-cell private call, wherein the private listening MS receives voice on the assigned TCH in the reselected cell .

The equipment configured for sending is configured for sending a command to a BTS for releasing the TCH assigned by the original cell of the private listening MS, and for sending a request to a BTS for assigning a TCH for the private listening MS in the reselected cell when an inter-cell private call is changed to another inter-cell private call, wherein the private listening MS receives voice on the assigned TCH in the reselected cell.

It can be seen from the above scheme that, in the method provided by the present invention, while reselecting the cell, the private listening MS actively initiates a private notification response to the network side, so that the network side can perform different processes according to different private call statuses before and after the private listening MS reselects the cell, thus the private listening MS can listen to the voice on the TCH in the reselected cell. Since the method provided by the present invention needs not occupy the NCHs of the all cells in the area that the private listening MS may pass, or not all the cells covered in the area that the private listening MS may pass need to provide TCHs for the private listening MS, the method provided by the present invention does not add load to the NCH of the cell or occupy the TCHs of multiple cells. Therefore, the present invention implements the voice reception for the private listening MS after cell reselection on the basis of guaranteeing the scheduling performance of the trunking system private calls.

### Brief Description of the Drawings

Figure 1 is a flowchart illustrating a method for a private listening MS to receive voice after cell reselection during a private call according to an embodiment of the present invention.
Figure 2 is a flowchart illustrating a method for a private listening MS to receive voice after cell reselection when an inter-cell private call is changed into another inter-cell private call due to the cell reselection according to an embodiment of the present invention.
Figure 3 is a flowchart illustrating a method for a private listening MS to receive voice after cell reselection when an inter-cell private call is changed into an intra-cell private call due to the cell reselection according to an embodiment of the present invention.
Figure 4 is a flowchart illustrating a method for a private listening MS to receive voice after cell reselection when an intra-cell private call is changed into an inter-cell private call due to the cell reselection according to an embodiment of the present invention.

### Detailed Description of the Invention

To make the technical scheme and advantages of the present invention clearer and more understandable, the present invention will be described in detail hereinafter with reference to several embodiments and accompanying drawings.

If the two sides of the private call are in the same cell, i.e., the private listening MS and the private speaking MS are in the same cell, the two sides share the same TCH. The intra-cell private call adopts the half-duplex mode, a downlink of the TCH is used for receiving voice and an uplink of the TCH is used for speaking, which is referred to as an intra-cell private call in the present invention. If two sides belong to different cells, each of them respectively occupies a TCH, they communicate with each other in the half-duplex mode and preempt to speak through pressing the PTT key, which is referred to as an inter-cell private call in the present invention.

During a private call, there are three types of the private call statuses before and after the cell reselection of the private listening MS according to types of the private calls before and after the cell reselection of the private listening MS, i.e., according to the fact that the private call is an intra-cell private call or an inter-cell private call:
1. the inter-cell private call is changed to an intra-cell private call due to the cell reselection of the private listening MS;
2. the intra-cell private call is changed to an inter-cell private call due to the cell reselection of the private listening MS;
3. the inter-cell private call is changed to another inter-cell private call due to the cell reselection of the private listening MS.

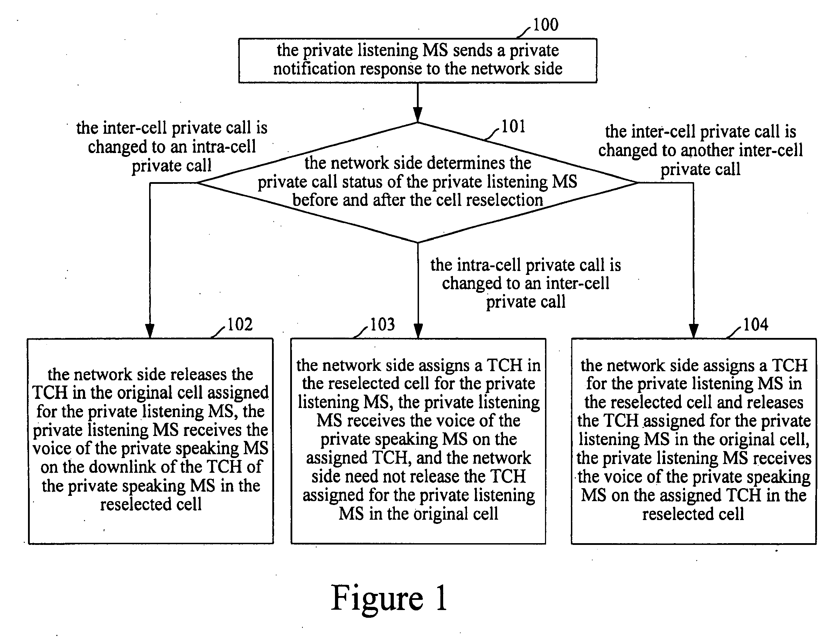

Figure 1 is a flowchart illustrating a method for a private listening MS to receive voice after cell reselection during a private call, the specific process is as follows:
Step 100: after moving across cells during the private call, the private listening MS actively sends a private notification response to the network side through a Base Transceiver Station (BTS) in the reselected cell, carrying the information of the reselected cell of the private listening MS.
   The information of the reselected cell of the private listening MS includes at least an identifier for uniquely identifying the reselected cell.
Step 101: after receiving the response, the network side compares the pre-stored information of the current cell of the private speaking MS with the information of the reselected cell of the private listening MS carried in the response and with the pre-stored information of the original cell of the private listening MS respectively, so as to determine which type the private call statuses of the private listening MS belongs to before and after the cell reselection. If it is the first type, i.e., the inter-cell private call is changed to an intra-cell private call, go to step 102; if it is the second type, i.e., the intra-cell private call is changed to an inter-cell private call, go to step 103; if it is the third type, i.e., the inter-cell private call is changed to another inter-cell private call, go to step 104.
   In another embodiment, the identifier of the current cell of the private speaking MS can be compared with that of the reselected cell of the private listening MS and with that of the original cell of the private listening MS respectively. When the identifier of the reselected cell of the private listening MS is the same as that of the current cell of the private speaking MS, it is the first type; when the identifier of the original cell of the private listening MS is the same as that of the current cell of the private speaking MS, it is the second type; when both the identifiers of the original cell and the reselected cell of the private listening MS are the same as that of the current cell of the private speaking MS, it is the third type.
Step 102: the network side releases the TCH assigned for the private listening MS in the original cell, the private listening MS receives the voice of the private speaking MS on the downlink of the TCH which has been assigned to the private speaking MS in the reselected cell.
Step 103: the network side assigns a TCH in the reselected cell for the private listening MS, the private listening MS receives the voice of the private speaking MS on the assigned TCH. The network side needs not release the TCH assigned for the private listening MS in the original cell, because the private speaking MS sends the voice on it.
Step 104: the network side assigns a TCH for the private listening MS in the reselected cell and releases the TCH assigned for the private listening MS in the original cell. The private listening MS receives the voice of the private speaking MS on the assigned TCH in the reselected cell.

When the private listening MS reselects a cell across location areas, i.e., across Base Station Controllers (BSCs), a location update process needs to be performed. There are two methods for the location update that can be adopted in the present invention. The first method: the private listening MS sends a private notification response to the network side. After the network side completes the private notification response process, the private listening MS initiates the location update process as soon as possible. The second method: the private listening MS updates the location before sending the private notification response, and then the network side processes the private notification response.

Both of the two methods have their own advantages and disadvantages: as to the first method, the time for the private listening MS to reselect a cell is short, but during a short period of time, the actual location area of the private listening MS may be different from that stored in a Visited Location Register (VLR) of the network side. As to the second method, the actual location area of the private listening MS is definitely the same as that stored in the VLR of the network side, but the time for the private listening MS to reselect a cell is relatively long.

The three situations when the private listening MS reselects a cell, i.e., an inter-cell private call being changed to an intra-cell private call, an intra-cell private call being changed to an inter-cell private call, an inter-cell private call being changed to another inter-cell private call, will be illustrated with reference to the signaling processes hereinafter.

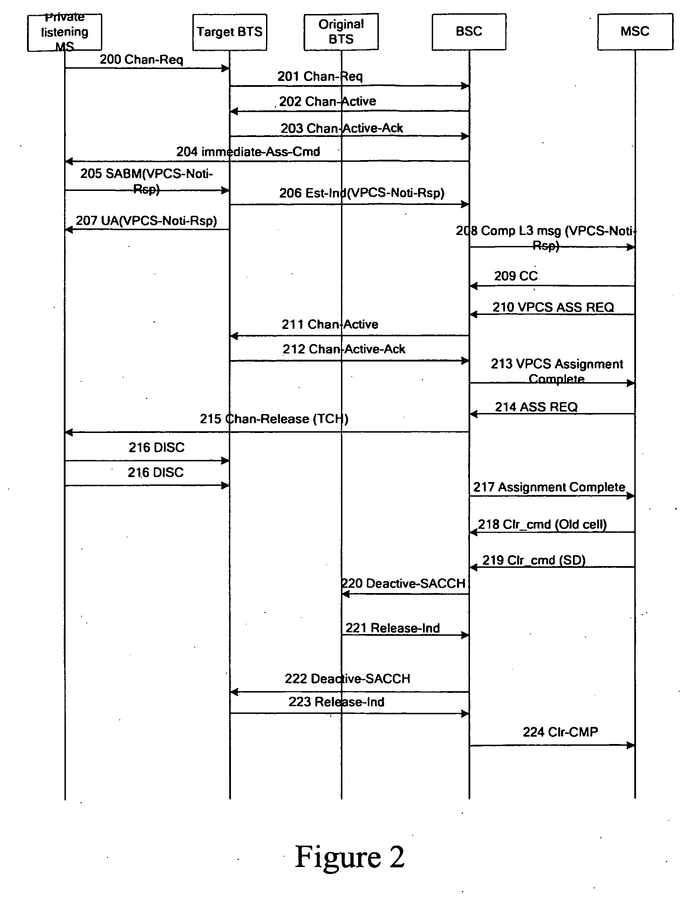

Figure 2 is a flowchart illustrating a method for a private listening MS to receive voice after cell reselection when an inter-cell private call is changed to another inter-cell private call due to the cell reselection of the private listening MS. Supposing that the reselected cell and the original cell of the private listening MS belong to different BTSs of the same BSC and the same MSC, herein, the BTS that the original cell belongs to is referred to as an original BTS, while the BTS that the reselected cell belongs to is referred to as a target BTS, the specific steps are:
step 200∼201: during the private call, the private listening MS moves to the reselected cell and sends a Channel Request message (Chan-Req) to the target BTS, then the target BTS forwards the message to the BSC;
step 202∼203: the BSC activates the Abis interface between the BSC and the target BTS and sends an Abis interface activated message (Chan-Active) to the target BTS, then the target BTS returns an Abis interface activated acknowledgement (Chan-Active-Ack);
step 204: the BSC immediately assigns an SDDCH for the private listening MS and transmits the channel information (Immediate-Ass-Cmd) of the assigned SDDCH to the private listening MS;
step 205: the private listening MS reports a link establish frame (SABM(VPCS-Noti-Rsp)) to the target BTS on the assigned SDCCH, wherein, the SABM(VPCS-Noti-Rsp) includes the private notification response which carries information of the reselected cell of the private listening MS;
step 206∼207: the target BTS reports a link establish frame (Est-Ind(VPCS-Noti-Rsp)) including the private notification response to the BSC, and then returns a response frame (UA (VPCS-Noti-Rsp)) to the private listening MS through a Um interface between the target BTS and the private listening MS;
step 208: the BSC sends a request (Comp L3 Msg(VPCS-Noti-Rsp)) which includes the private notification response, requesting the MSC to establish an SCCP connection for the current private notification response, wherein, the SCCP connection assigns a TCH and resource for speaking for the private listening MS in the reselected cell and for the private listening MS to receive voice;
step 209: the MSC establishes the SCCP connection and returns an SCCP Connection Confirmation (CC) to the BSC;
step 210: the MSC determines that the statuses of the current private call is an inter-cell private call being changed to another inter-cell private call according to the private notification response, and sends an assignment request (VPCS ASS REQ) of the current private call notification response to the BSC;
step 211: the BSC sends a command (Chan-Active) of assigning a TCH for the private listening MS to the target BTS;
step 212: after assigning a TCH for the private listening MS, the target BTS returns an acknowledgement (Chan-Active-Ack) of the command to the BSC;
step 213: the BSC sends a response of the assignment request completion (VPCS Assignment complete) to the MSC;
step 214: the MSC sends an assignment completion request (ASS REQ) of current private notification response to the BSC, wherein, the ASS REQ includes a private call reference, a Circuit (CIC) on an A interface and identifier information of the reselected cell;
step 215: the BSC releases the SDCCH established for the private listening MS and sends an SDCCH release message (Chan-Release(TCH)) to the private listening MS;
step 216: the private listening MS returns a link frame disconnect message (DISC), since the private listening MS will disconnect from the target BTS after sending this message, in order to make sure that the connection is successfully disconnected, this message is sent twice;
step 217: the BSC sends a response of the assignment complete request (Assignment complete) to the MSC;
step 218: the MSC sends a command (Clr-cmd (Old Cell)) to the BSC to clear the SCCP connection of original cell, i.e., to release the TCH assigned in the original cell;
step 219: the MSC sends a command (Clr-cmd (SD)) to the BSC to clear the SDCCH;
step 220: the BSC sends a message of deactivating a Slow Associated Control Channel (SACCH) (Deactive-SACCH) of the original cell to the original BTS, i.e., clears the SCCP connection of the original cell and releases the TCH assigned in the original cell;
step 221: the original BTS returns a release indication (Release-Ind) of the message to the BSC;
step 222: the BSC sends an deactivate SACCH message (Deactive-SACCH) to the target BTS, in other words, the BSC deactivates the SACCH according to the private group call reference, the CIC on the A interface and the identifier information of the reselected cell;
step 223: the target BTS returns a release indication (Release-Ind) of the message to the BSC;
step 224: the BSC returns a clear completion message (Clr-CMP) to the MSC.

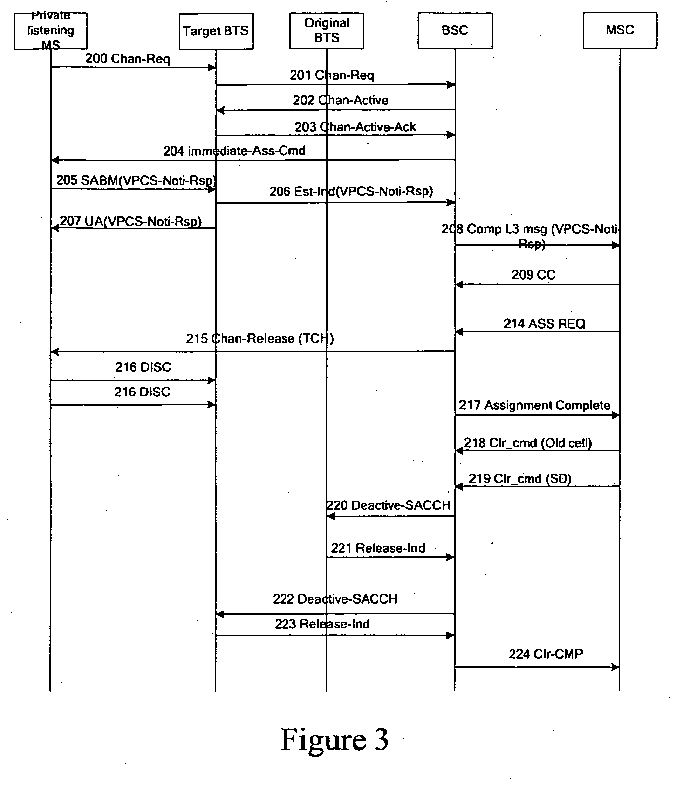

Figure 3 is a flowchart illustrating a method for a private listening MS to receive voice after cell reselection when an inter-cell private call is changed to an intra-cell private call due to the cell reselection of the private listening MS. A large part of the process shown in Figure 3 is the same as that in Figure 2, the difference lies in that since the private call is changed to an intra-cell private call after the cell reselection, the private listening MS can directly share the TCH assigned for the private speaking MS with the private speaking MS, so there is no need to assign a TCH for the private listening MS at the target BTS. In other words, after the MSC confirms that the inter-cell private call is changed to an intra-cell private call, step 210 to step 213 in Figure 2 are omitted.

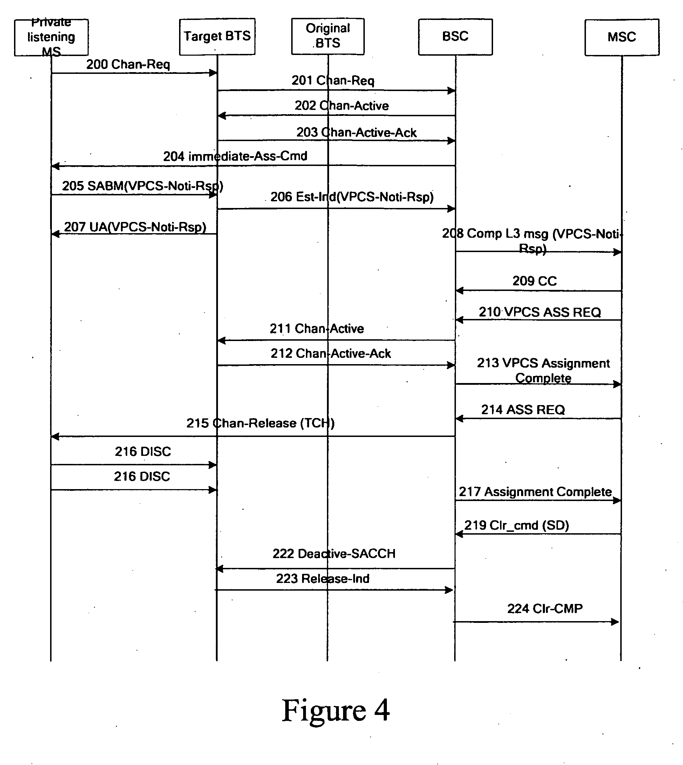

Figure 4 is a flowchart illustrating a method for a private listening MS to receive voice after cell reselection when an intra-cell private call is changed to an inter-cell private call due to the cell reselection of the private listening MS. A large part of the process shown in Figure 4 is the same as that in Figure 2, the difference lies in that since the private call is an intra-cell private call before the cell reselection, the TCH in the original cell occupied by the private listening MS is still occupied by the private speaking MS, so there is no need to release the TCH assigned for the private listening MS in the original BTS. In other words, after the MSC confirms that the intra-cell private call is changed to an inter-cell private call, step 218 and step 220 to step 221 in Figure 2 are omitted.

The above embodiments suppose that the reselected cell of the private listening MS and the original cell belong to the same BSC. In practical applications, the reselected cell of the private listening MS and the original cell can also belong to different BSCs. Thus during the whole process, the steps executed by the private listening MS in the reselected cell and those assigned to the private listening MS by the MSC will be executed by the BSC of the reselected cell. The steps assigned to the private listening MS by the MSC of the original cell will be executed by the BSC of the original cell.

The GSM-based digital trunking system of the present invention supports the private listening MS to move across cells when providing the VPCS. In other words, the private listening MS still takes part in the private call during cell reselection, which is implemented just by dynamically assigning a TCH while the private listening MS reselecting the cell. The present invention needs not to assign a TCH for each cell covered by the area that the private listening MS may pass as in the prior art, and needs not to broadcast a group call notification on the NCH of each cell covered by the area that the private listening MS may pass as in the prior art. The network side of the present invention may only assign a group call channel in the cell where the MS currently located when receiving a group call notification response from the MS after the cell reselection. Therefore, the present invention will not add load to the NCH of the cell or occupy TCHs of multiple cells, thereby improving the performance and the channel utilization ratio of the whole trunking system.

The above-mentioned embodiments are only the preferred embodiments of the present invention, which are not used to confine the protection scope of the present invention. Various changes in form and in detail made without departing from the scope of the invention as defined by the appended claims are all covered in the protection scope of the present invention.

## Claims

1. A method for a private listening Mobile Station, MS, to receive voice after a cell reselection in a GSM-based digital trunking system, comprising the steps of:
a network side of the digital trunking system (100) receiving a private notification response from the private listening MS, which moves across cells;
the network side determining the private call statuses of the private listening MS before and after the cell reselection according to the private notification response (101);
when an inter-cell private call is changed to an intra-cell private call, the network side releasing a Traffic Channel, TCH, assigned by an original cell of the private listening MS, voice is received by the private listening MS on a TCH assigned for a private speaker in the reselected cell (102);
when an intra-cell private call is changed to an inter-cell private call, the network side assigning a TCH for the private listening MS in the reselected cell, voice is received by the private listening MS on the assigned TCH in the reselected cell (103);
when an inter-cell private call is changed to another inter-cell private call, the network side releasing the TCH assigned for the private listening MS in the original cell and assigning a TCH for the private listening MS in the reselected cell, voice is received by the private listening MS on the assigned TCH in the reselected cell (104).

2. The method according to claim 1, wherein, the private notification response carries information of the reselected cell of the private listening MS;
the step (101) of determining the private call status of the private listening MS before and after reselecting the cell comprises:
when the information of the original cell of the private listening MS stored in the network side is the same as that of current cell of the private speaking MS, changing the intra-cell private call to an inter-cell private call;
when the information of the reselected cell of the private listening MS carried in the private notification response is the same as that of current cell of the private speaking MS stored in the network side, changing the inter-cell private call to an intra-cell private call;
when the information of original cell of the private listening MS stored in the network side is different from that of the current cell of the private speaking MS stored in the network side, and the information of the reselected cell of the private listening MS carried in the private notification response is different from that of the current cell of the private speaking MS stored in the network side, changing the inter-cell private call to another inter-cell private call.

3. The method according to claim 2, wherein, the information of the reselected cell of the private listening MS comprises at least an identifier which is used for uniquely identifying the reselected cell of the private listening MS.

4. The method according to claim 1, further comprising: when the private listening MS is moving across cells which belong to different location areas, updating the location of the private listening MS after the private listening MS begins to receive voice in the reselected cell or before the private listening MS sends the private notification response to the network side of the digital trunking system.

5. The method according to claim 1, wherein, the private notification response is sent to a Base Station Controller, BSC, of the network side through a target Base Transceiver Station, BTS, of the reselected cell of the private listening MS;
after receiving the private notification response from the private listening MS by the network side, the method further comprising:
the BSC activating an Abis interface between the BSC and the target BTS, and sending an Abis interface activated message to the target BTS (202);
the target BTS sending an Abis interface activated response to the BSC (203), the BSC assigning a Stand-alone Dedicated Control Channel, SDCCH, for the private listening MS (204);
the BSC receiving a link establish frame reported by the private listening MS on the assigned SDCCH through the target BTS (205), the BSC returning a confirmation frame to the private listening MS (207);
the BSC requesting a Mobile Switching Center, MSC, of the network side it belongs to, to establish a Signaling Connection Control Point, SCCP, connection for the current private notification response (208);
the MSC of the network side determining the private call statuses of the private listening MS before and after the cell reselection (210).

6. The method according to claim 5, further comprising:
after the private listening MS begins to receive voice in the reselected cell, the MSC of the network side sending an assignment completion command of the current private notification response to the BSC (214);
the BSC releasing the SDCCH established for the private listening MS (215);
the BSC receiving a link frame disconnect message returned by the private listening MS through the target BTS (216);
the BSC sending a clear completion message to the MSC of the network side (224).

7. The method according to claim 1, wherein,
the step of releasing a TCH assigned by an original cell of the private listening MS comprises:
clearing the SCCP connection of the private listening MS in the original cell (215∼216);
the step of assigning a TCH for the private listening MS in the reselected cell includes:
after establishing the SCCP connection in the reselected cell for the private listening MS, assigning a TCH (211∼213);
the step of releasing the TCH assigned for the private listening MS in the original cell and assigning a TCH for the private listening MS in the reselected cell comprises:
clearing the SCCP connection of the private listening MS in the original cell (215∼216), after establishing the SCCP connection in the reselected cell for the private listening MS, assigning a TCH (211∼213).

8. The method according to claim 7, further comprising:
when the information of the reselected cell of the private listening MS carried in the private notification response is the same as that of current cell of the private speaking MS stored in the network side, the network side not deleting the SCCP connection of the private listening MS in the original cell and not releasing the TCH assigned for the private listening MS in the original cell.

9. A GSM-based digital trunking system, comprising one or more network side apparatuses, wherein the digital trunking system is configured for carrying out the method of any of claims 1-8.

10. A Mobile Switching Center, MSC, in a GSM-based digital trunking system comprising:
equipment configured for receiving a private notification response from a private listening MS, which moves across cells;
equipment configured for determining the private call statuses of the private listening MS before and after the cell reselection according to the private notification response; and
equipment configured for sending a command to a Base Station Controller, BSC, for releasing a Traffic Channel, TCH, assigned by an original cell of the private listening MS when an inter-cell private call is changed to an intra-cell private call, wherein the private listening MS receives voice on a TCH assigned for a private speaker in the reselected cell.

11. The MSC according to claim 10, wherein
the equipment configured for sending is configured for sending a request to a BSC for assigning a TCH for the private listening MS in the reselected cell when an intra-cell private call is changed to an inter-cell private call, wherein the private listening MS receives voice on the assigned TCH in the reselected cell.

12. The MSC according to claim 11, wherein
the equipment configured for sending is configured for sending a command to a BSC for releasing the TCH assigned by the original cell of the private listening MS, and for sending a request to a BSC for assigning a TCH for the private listening MS in the reselected cell when an inter-cell private call is changed to another inter-cell private call, wherein the private listening MS receives voice on the assigned TCH in the reselected cell.

13. A Base Station Controller, BSC, in a GSM-based digital trunking system comprising:
equipment configured for receiving a private notification response from a private listening MS, which moves across cells;
equipment configured for sending a request to a Mobile Switching Center, MSC, including the private notification response; wherein
the equipment configured for receiving is configured for receiving a result, determined by the MSC, of the private call statuses of the private listening MS before and after the cell reselection according to the private notification response, and
the equipment configured for sending is configured for sending a message to a Base Transceiver Station, BTS, for releasing a Traffic Channel, TCH, assigned by an original cell of the private listening MS when an inter-cell private call is changed to an intra-cell private call, wherein the private listening MS receives voice on a TCH assigned for a private speaker in the reselected cell.

14. The BSC according to claim 13, wherein
the equipment configured for sending is configured for sending a command to a BTS, for assigning a TCH for the private listening MS in the reselected cell when an intra-cell private call is changed to an inter-cell private call, wherein the private listening MS receives voice on the assigned TCH in the reselected cell .

15. The BSC according to claim 14, wherein
the equipment configured for sending is configured for sending a command to a BTS for releasing the TCH assigned by the original cell of the private listening MS, and for sending a request to a BTS for assigning a TCH for the private listening MS in the reselected cell when an inter-cell private call is changed to another inter-cell private call, wherein the private listening MS receives voice on the assigned TCH in the reselected cell.

## Patentansprüche

1. Verfahren für eine private hörende Mobilstation, MS, um nach einer Zellenwahl in einem GSM-basierten Digital-Trunking-System Sprache zu empfangen, umfassend die Schritte, dass eine Netzseite des Digital-Trunking-Systems eine private Benachrichtigungsantwort von der privaten hörenden MS empfängt, die sich durch Zellen bewegt (100);
die Netzseite die Privatanrufstatus der privaten hörenden MS vor und nach der Zellenwahl gemäß der privaten Benachrichtigungsantwort ermittelt (101);
wenn ein privater Zwischenzellenanruf in einen zelleninternen privaten Anruf geändert wird, die Netzseite einen durch eine ursprüngliche Zelle der privaten hörenden MS zugeordneten Verkehrskanal, TCH, freigibt, wobei Sprache durch die private hörende MS an einem für einen privaten Sprecher zugeordneten TCH in der gewählten Zelle empfangen wird (102);
wenn ein zelleninterner privater Anruf in einen privaten Zwischenzellenanruf geändert wird, die Netzseite einen TCH für die private hörende MS in der gewählten Zelle zuordnet, wobei Sprache durch die private hörende MS an dem zugeordneten TCH in der gewählten Zelle empfangen wird (103);
wenn ein privater Zwischenzellenanruf in einen anderen privaten Zwischenzellenanruf geändert wird, die Netzseite den für die private hörende MS zugeordneten TCH in der ursprünglichen Zelle freigibt und einen TCH für die private hörende MS in der gewählten Zelle zuordnet, wobei Sprache durch die private hörende MS an dem zugeordneten TCH in der gewählten Zelle empfangen wird (104).

2. Verfahren nach Anspruch 1,
wobei die private Benachrichtigungsantwort eine Information der gewählten Zelle der privaten hörenden MS trägt;
wobei der Schritt (101) des Ermittelns des Privatanrufstatus der privaten hörenden MS vor und nach dem Wählen der Zelle umfasst, dass
wenn die in der Netzseite gespeicherte Information der ursprünglichen Zelle der privaten hörenden MS die gleiche ist wie die der momentanen Zelle der privaten sprechenden MS, der zelleninterne private Anruf in einen privaten Zwischenzellenanruf geändert wird;
wenn die in der privaten Benachrichtigungsantwort getragene Information der gewählten Zelle der privaten hörenden MS die gleiche ist wie die der momentanen Zelle der privaten sprechenden MS, die in der Netzseite gespeichert ist, der private Zwischenzellenanruf in einen zelleninternen privaten Anruf geändert wird;
wenn sich die Information der ursprünglichen Zelle der privaten hörenden MS, die in der Netzseite gespeichert ist, von der der momentanen Zelle der privaten sprechenden MS, die in der Netzseite gespeichert ist, unterscheidet, und sich die Information der gewählten Zelle der privaten hörenden MS, die in der privaten Benachrichtigungsantwort getragen ist, von der der momentanen Zelle der privaten sprechenden MS, die in der Netzseite gespeichert ist, unterscheidet, der private Zwischenzellenanruf in einen anderen privaten Zwischenzellenanruf geändert wird.

3. Verfahren nach Anspruch 2,
wobei die Information der gewählten Zelle der privaten hörenden MS mindestens einen Identifikator umfasst, der verwendet wird, um die gewählte Zelle der privaten hörenden MS eindeutig zu identifizieren.

4. Verfahren nach Anspruch 1,
das ferner umfasst, dass, wenn sich die private hörende MS durch Zellen bewegt, die zu verschiedenen Aufenthaltsbereichen gehören, der Aufenthaltsort der privaten hörenden MS aktualisiert wird, nachdem die private hörende MS beginnt, in der gewählten Zelle Sprache zu empfangen, oder bevor die private hörende MS die private Benachrichtigungsantwort an die Netzseite des Digital-Trunking-Systems sendet.

5. Verfahren nach Anspruch 1,
wobei die private Benachrichtigungsantwort an einen Basisstations-Controller, BSC, der Netzseite über eine Ziel-Basisstation, Ziel-BTS, der gewählten Zelle der privaten hörenden MS gesendet wird;
wobei das Verfahren ferner umfasst, dass nach dem Empfangen der privaten Benachrichtigungsantwort von der privaten hörenden MS durch die Netzseite
der BSC eine Abis-Schnittstelle zwischen dem BSC und der Ziel-BTS aktiviert und eine Abis-Schnittstelle-Aktiviert-Nachricht an die Ziel-BTS sendet (202);
die Ziel-BTS eine Abis-Schnittstelle-Aktiviert-Antwort an den BSC sendet (203) und der BSC einen selbständigen dedizierten Steuerkanal, SDCCH, für die private hörende MS zuordnet (204);
der BSC einen Link-Herstellungs-Frame empfängt, der durch die private hörende MS an dem zugeordneten SDCCH über die Ziel-BTS berichtet wird (205), wobei der BSC einen Bestätigungs-Frame an die private hörende MS zurücksendet (207);
der BSC eine Mobilfunkvermittlungsstelle, MSC, der Netzseite, zu der er gehört, auffordert, eine Signalisierungsverbindungssteuerungsteil-Verbindung, SCCP-Verbindung, für die momentane private Benachrichtigungsantwort herzustellen (208);
der MSC der Netzseite die Privatanrufstatus der privaten hörenden MS vor und nach der Zellenwahl ermittelt (210).

6. Verfahren nach Anspruch 5, das ferner umfasst, dass nachdem die private hörende MS beginnt, Sprache in der gewählten Zelle zu empfangen, die MSC der Netzseite einen Zuordnungsabschlussbefehl der momentanen privaten Benachrichtigungsantwort an den BSC sendet (214);
der BSC den für die private hörende MS hergestellten SDCCH freigibt (215);
der BSC eine Link-Frame-Trennungsnachricht empfängt, die durch die private hörende MS über die Ziel-BTS zurückgesendet wird (216);
der BSC eine Löschabschlussnachricht an die MSC der Netzseite sendet (224).

7. Verfahren nach Anspruch 1, wobei der Schritt des Freigebens eines durch eine ursprüngliche Zelle der privaten hörenden MS zugeordneten TCH umfasst, dass
die SCCP-Verbindung der privaten hörenden MS in der ursprünglichen Zelle gelöscht wird (215 ∼ 216);
der Schritt des Zuordnens eines TCH für die private hörende MS in der gewählten Zelle umfasst, dass nach dem Herstellen der SCCP-Verbindung in der gewählten Zelle für die private hörende MS ein TCH zugeordnet wird (211 ∼ 213);
der Schritt des Freigebens des für die private hörende MS in der ursprünglichen Zelle zugeordneten TCH und des Zuordnens eines TCH für die private hörende MS in der gewählten Zelle umfasst, dass
die SCCP-Verbindung der privaten hörenden MS in der ursprünglichen Zelle gelöscht wird (215 ∼ 216), nachdem die SCCP-Verbindung in der gewählten Zelle für die private hörende MS hergestellt wurde und ein TCH zugeordnet wurde (211 ∼ 213).

8. Verfahren nach Anspruch 7, das ferner umfasst, dass wenn die Information der gewählten Zelle der privaten hörenden MS, die in der privaten Benachrichtigungsantwort getragen ist, die gleiche ist wie die der momentanen Zelle der privaten sprechenden MS, die in der Netzseite gespeichert ist, die Netzseite die SCCP-Verbindung der privaten hörenden MS in der ursprünglichen Zelle nicht löscht und den für die private hörende MS zugeordneten TCH in der ursprünglichen Zelle nicht freigibt.

9. GSM-basiertes Digital-Trunking-System, umfassend eine oder mehrere Netzseitenvorrichtungen, wobei das Digital-Trunking-System ausgestaltet ist, um das Verfahren nach einem der Ansprüche 1 - 8 auszuführen.

10. Mobilfunkvermittlungsstelle, MSC, in einem GSM-basierten Digital-Trunking-System, umfassend
ein Gerät, das ausgestaltet ist, um eine private Benachrichtigungsantwort von einer privaten hörenden MS zu empfangen, die sich durch Zellen bewegt;
ein Gerät, das ausgestaltet ist, um die Privatanrufstatus der privaten hörenden MS vor und nach der Zellenwahl gemäß der privaten Benachrichtigungsantwort zu ermitteln; und
ein Gerät, das ausgestaltet ist, um einen Befehl zum Freigeben eines durch eine ursprüngliche Zelle der privaten hörenden MS zugeordneten Verkehrskanals, TCH, an einen Basisstations-Controller, BSC, zu senden, wenn ein privater Zwischenzellenanruf in einen zelleninternen privaten Anruf geändert wird, wobei die private hörende MS an einem für einen privaten Sprecher in der gewählten Zelle zugeordneten TCH Sprache empfängt.

11. MSC nach Anspruch 10, wobei
das Gerät, das zum Senden ausgestaltet ist, ausgestaltet ist, um eine Aufforderung zum Zuordnen eines TCH für die private hörende MS in der gewählten Zelle an einen BSC zu senden, wenn ein zelleninterner privater Anruf in einen privaten Zwischenzellenanruf geändert wird, wobei die private hörende MS an dem zugeordneten TCH in der gewählten Zelle Sprache empfängt.

12. MSC nach Anspruch 11, wobei
das Gerät, das zum Senden ausgestaltet ist, ausgestaltet ist, um einen Befehl zum Freigeben des durch die ursprüngliche Zelle der privaten hörenden MS zugeordneten TCH an einen BSC zu senden, und um eine Aufforderung zum Zuordnen eines TCH für die private hörende MS in der gewählten Zelle an einen BSC zu senden, wenn ein privater Zwischenzellenanruf in einen anderen privaten Zwischenzellenanruf geändert wird, wobei die private hörende MS an dem zugeordneten TCH in der gewählten Zelle Sprache empfängt.

13. Basisstations-Controller, BSC, in einem GSM-basierten Digital-Trunking-System, umfassend:
ein Gerät, das ausgestaltet ist, um eine private Benachrichtigungsantwort von einer privaten hörenden MS zu empfangen, die sich durch Zellen bewegt;
ein Gerät, das ausgestaltet ist, um eine Aufforderung an eine Mobilfunkvermittlungsstelle, MSC, zu senden, die die private Benachrichtigungsantwort umfasst; wobei
das Gerät, das zum Empfangen ausgestaltet ist, ausgestaltet ist, um ein durch die MSC ermitteltes Ergebnis der Privatanrufstatus der privaten hörenden MS vor und nach der Zellenwahl gemäß der privaten Benachrichtigungsantwort zu empfangen, und
das Gerät, das zum Senden ausgestaltet ist, ausgestaltet ist, um eine Nachricht zum Freigeben eines durch eine ursprüngliche Zelle der privaten hörenden MS zugeordneten Verkehrskanals, TCH, an eine Basisstation, BTS, zu senden, wenn ein privater Zwischenzellenanruf in einen zelleninternen privaten Anruf geändert wird, wobei die private hörende MS an einem für einen privaten Sprecher in der gewählten Zelle zugeordneten TCH Sprache empfängt.

14. BSC nach Anspruch 13, wobei
das Gerät, das zum Senden ausgestaltet ist, ausgestaltet ist, um einen Befehl zum Zuordnen eines TCH für die private hörende MS in der gewählten Zelle an eine BTS zu senden, wenn ein zelleninterner privater Anruf in einen privaten Zwischenzellenanruf geändert wird, wobei die private hörende MS an dem zugeordneten TCH in der gewählten Zelle Sprache empfängt.

15. BSC nach Anspruch 14, wobei
das Gerät, das zum Senden ausgestaltet ist, ausgestaltet ist, um einen Befehl zum Freigeben des durch die ursprüngliche Zelle der privaten hörenden MS zugeordneten TCH an eine BTS zu senden, und um eine Aufforderung zum Zuordnen eines TCH für die private hörende MS in der gewählten Zelle an eine BTS zu senden, wenn ein privater Zwischenzellenanruf in einen anderen privaten Zwischenzellenanruf geändert wird, wobei die private hörende MS an dem zugeordneten TCH in der gewählten Zelle Sprache empfängt.

## Revendications

1. Procédé destiné à une Station Mobile, MS, en écoute privée, afin de recevoir de la voix après une resélection de cellule dans un système numérique à ressources partagées de type GSM, comprenant les étapes de :
réception par un côté réseau du système numérique à ressources partagées (100) d'une réponse de notification privée de la station MS en écoute privée qui se déplace parmi des cellules ;
détermination par le côté réseau des états d'appels privés de la station MS en écoute privée avant et après la resélection de cellule en conformité avec la réponse de notification privée (101) ;
lorsqu'un appel privé intercellulaire est transformé en un appel privé intracellulaire, la libération par le côté réseau d'un Canal de Trafic, TCH, affecté par une cellule d'origine de la station MS en écoute privée, de la voix étant reçue par la station MS en écoute privée sur un canal TCH affecté à un interlocuteur privé dans la cellule resélectionnée (102) ;
lorsqu'un appel privé intracellulaire est transformé en un appel privé intercellulaire, l'affectation par le côté réseau d'un Canal TCH destiné à la station MS en écoute privée dans la cellule resélectionnée, de la voix étant reçue par la station MS en écoute privée sur le canal TCH affecté dans la cellule resélectionnée (103) ;
lorsqu'un appel privé intercellulaire est transformé en un autre appel privé intercellulaire, la libération par le côté réseau du canal TCH affecté à la station MS en écoute privée dans la cellule d'origine et l'affectation d'un canal TCH à la station MS en écoute privée dans la cellule resélectionnée, de la voix étant reçue par la station MS en écoute privée sur le canal TCH affecté dans la cellule resélectionnée (104).

2. Procédé selon la revendication 1, dans lequel la réponse de notification privée achemine des informations de la cellule resélectionnée de la station MS en écoute privée ;
l'étape (101) de détermination de l'état d'appels privés de la station MS en écoute privée avant et après la resélection de la cellule comprend :
lorsque les informations de la cellule d'origine de la station MS en écoute privée stockées du côté du réseau sont identiques à celles de la cellule courante de la station MS en conversation privée, la transformation de l'appel privé intracellulaire en un appel privé intercellulaire ;
lorsque les informations de la cellule resélectionnée de la station MS en écoute privée acheminées dans la réponse de notification privée sont identiques à celles de la cellule courante de la station MS en conversation privée stockées du côté du réseau, la transformation de l'appel privé intercellulaire en un appel privé intracellulaire ;
lorsque les informations de la cellule d'origine de la station MS en écoute privée stockées du côté du réseau sont différentes de celles de la cellule courante de la station MS en conversation privée stockées du côté du réseau et lorsque les informations de la cellule resélectionnée de la station MS en écoute privée acheminées dans la réponse de notification privée sont différentes de celles de la cellule courante de la station MS en conversation privée stockées du côté du réseau, la transformation de l'appel privé intercellulaire en un appel privé intracellulaire.

3. Procédé selon la revendication 2, dans lequel les informations de la cellule resélectionnée de la station MS en écoute privée comprennent au moins un identificateur qui est utilisé pour identifier de façon unique la cellule resélectionnée de la station MS en écoute privée.

4. Procédé selon la revendication 1, comprenant en outre :
lorsque la station MS en écoute privée se déplace parmi des cellules qui appartiennent à des zones de localisation différentes, la mise à jour de la localisation de la station MS en écoute privée après que la station MS en écoute privée a commencé à recevoir de la voix dans la cellule resélectionnée ou avant que la station MS en écoute privée envoie la réponse de notification privée au côté réseau du système numérique à ressources partagées.

5. Procédé selon la revendication 1, dans lequel la réponse de notification privée est envoyée à un Contrôleur de Station de Base, BSC, du côté réseau par l'intermédiaire d'une Station d'Émission/Réception de Base, BTS, cible de la cellule resélectionnée de la station MS en écoute privée ;
après réception de la réponse de notification privée en provenance de la station MS en écoute privée par le côté réseau, le procédé comprenant en outre :
l'activation par le contrôleur BSC d'une interface Abis entre le contrôleur BSC et la station BTS cible, et l'envoi d'un message d'interface Abis activée à la station BTS cible (202) ;
l'envoi par la station BTS cible d'une réponse d'interface Abis activée au contrôleur BSC (203), le contrôleur BSC affectant un Canal de Commande Spécialisé Autonome, SDCCH, pour la station MS en écoute privée (204) ;
la réception par le contrôleur BSC d'une trame d'établissement de liaison signalée par la station MS en écoute privée sur le canal SDCCH affecté par l'intermédiaire de la station BTS cible (205), le contrôleur BSC renvoyant une trame de confirmation à la station MS en écoute privée (207) ;
la demande par le contrôleur BSC à un Centre de Commutation Mobile, MSC, du côté réseau auquel il appartient, d'établissement d'une connexion à un Point de Commande de Signalisation, SCCP, pour la réponse de notification privée courante (208) ;
la détermination par le centre MSC du côté réseau des états d'appels privés de la station MS en écoute privée avant et après la resélection de cellule (210).

6. Procédé selon la revendication 5, comprenant en outre :
après que la station MS en écoute privée a commencé à recevoir de la voix dans la cellule resélectionnée, l'envoi par le centre MSC du côté réseau d'une commande de fin d'affectation de la réponse de notification privée courante au contrôleur BSC (214) ;
la libération par le contrôleur BSC du canal SDCCH établi pour la station MS en écoute privée (215) ;
la réception par le contrôleur BSC d'un message de déconnexion de trame de liaison renvoyé par la station MS en écoute privée par l'intermédiaire de la station BTS cible (216) ;
l'envoi par le contrôleur BSC d'un message d'annulation au contrôleur MSC du côté réseau (224).

7. Procédé selon la revendication 1, dans lequel :
l'étape de libération d'un canal TCH affecté par une cellule d'origine de la station MS en écoute privée comprend :
l'annulation de la connexion SCCP de la station MS en écoute privée dans la cellule d'origine (215∼216) ;
l'étape d'affectation d'un canal TCH à la station MS en écoute privée dans la cellule resélectionnée comprend :
après établissement de la connexion au point SCCP dans la cellule resélectionnée pour la station MS en écoute privée, l'affectation d'un canal TCH (211∼213) ;
l'étape de libération du canal TCH affecté à la station MS en écoute privée dans la cellule d'origine et d'affectation d'un canal TCH à la station MS en écoute privée dans la cellule resélectionnée, comprend :
l'annulation de la connexion au point SCCP de la station MS en écoute privée dans la cellule d'origine (215∼216), et après établissement de la connexion au point SCCP dans la cellule resélectionnée pour la station MS en écoute privée, l'affectation d'un canal TCH (211∼213).

8. Procédé selon la revendication 7, comprenant en outre :
lorsque les informations de la cellule resélectionnée de la station MS en écoute privée acheminées dans la réponse de notification privée sont identiques à celles de la cellule courante de la station MS en conversation privée stockées du côté du réseau, le côté réseau n'élimine pas la connexion au point SCCP de la station MS en écoute privée dans la cellule d'origine et ne libère pas le canal TCH affecté à la station MS en écoute privée dans la cellule d'origine.

9. Système numérique à ressources partagées de type GSM, comprenant un ou plusieurs appareils du côté réseau, dans lequel le système à ressources partagées est configuré pour mettre en oeuvre le procédé selon l'une quelconque des revendications 1-8.

10. Centre de Commutation Mobile, MSC, dans un système numérique à ressources partagées de type GSM, comprenant :
un équipement configuré pour la réception d'une réponse de notification privée d'une station MS en écoute privée qui se déplace parmi des cellules ;
un équipement configuré pour la détermination des états d'appels privés de la station MS en écoute privée avant et après la resélection de cellules en fonction de la réponse de notification privée ; et
un équipement configuré pour l'envoi d'une commande à un Contrôleur de Station de Base, BSC, pour libérer un Canal de Trafic, TCH, affecté par une cellule d'origine de la station MS en écoute privée lorsqu'un appel privé intercellulaire est transformé en un appel privé intracellulaire, dans lequel la station MS en écoute privée reçoit de la voix sur un canal TCH affecté à un interlocuteur privé dans la cellule resélectionnée.

11. Centre MSC selon la revendication 10, dans lequel :
l'équipement configuré pour l'envoi est configuré pour l'envoi d'une demande à un contrôleur BSC pour affecter un canal TCH destiné à la station MS en écoute privée dans la cellule resélectionnée lorsqu'un appel privé intracellulaire est transformé en un appel privé intercellulaire, dans lequel la station MS en écoute privée reçoit de la voix sur le canal TCH affecté dans la cellule resélectionnée.

12. Centre MSC selon la revendication 11, dans lequel :
l'équipement configuré pour l'envoi est configuré pour l'envoi d'une commande à un contrôleur BSC pour libérer le canal TCH affecté par la cellule d'origine de la station MS en écoute privée et pour l'envoi d'une demande à un contrôleur BSC pour l'affectation d'un canal TCH destiné à la station MS en écoute privée dans la cellule resélectionnée lorsqu'un appel privé intercellulaire est transformé en un autre appel privé intercellulaire, dans lequel la station MS en écoute privée reçoit de la voix sur le canal TCH affecté dans la cellule resélectionnée.

13. Contrôleur de Station de Base, BSC, dans un système numérique à ressources partagées de type GSM, comprenant :
un équipement configuré pour la réception d'une réponse de notification privée d'une station MS en écoute privée qui se déplace parmi des cellules ;
un équipement configuré pour l'envoi d'une demande à un Centre de Commutation Mobile, MSC, comportant la réponse de notification privée ; dans lequel
l'équipement configuré pour la réception est configuré pour la réception d'un résultat déterminé par le centre MSC des états d'appels privés de la station MS en écoute privée avant et après la resélection de cellule en conformité avec la réponse de notification privée, et
l'équipement configuré pour l'envoi est configuré pour l'envoi d'un message à une Station d'Émission/Réception de Base, BTS, pour libérer un Canal de Trafic, TCH, affecté par une cellule d'origine de la station MS en écoute privée lorsqu'un appel privé intercellulaire est transformé en un appel privé intracellulaire, dans lequel la station MS en écoute privée reçoit de la voix sur un canal TCH affecté à un locuteur privé dans la cellule resélectionnée.

14. Contrôleur BSC selon la revendication 13, dans lequel
l'équipement configuré pour l'envoi est configuré pour l'envoi d'une commande à une station BTS, l'affectation d'un canal TCH destiné à la station MS en écoute privée dans la cellule resélectionnée lorsqu'un appel privé intracelullaire est transformé en un appel privé intercellulaire, dans lequel la station MS en écoute privée reçoit de la voix sur le canal TCH affecté dans la cellule resélectionnée.

15. Contrôleur BSC selon la revendication 14, dans lequel
l'équipement configuré pour l'envoi est configuré pour l'envoi d'une commande à une station BTS, pour libérer le canal TCH affecté par la cellule d'origine de la station MS en écoute privée et pour l'envoi d'une demande d'affectation d'un canal TCH à la station MS en écoute privée dans la cellule resélectionnée lorsqu'un appel privé intercelullaire est transformé en un autre appel privé intercellulaire, dans lequel la station MS en écoute privée reçoit de la voix sur le canal TCH affecté dans la cellule resélectionnée.
